# EUROPEAN PATENT SPECIFICATION

(11) **EP 2 707 594 B1**
(45) Date of publication and mention of the grant of the patent: **29.04.2015**
(21) Application number: 12725877.0
(22) Date of filing: 10.05.2012
(51) Int. Cl.: F02M 61/18, F02B 23/10

(54) **FUEL INJECTION APPARATUS FOR INTERNAL COMBUSTION ENGINE**
KRAFTSTOFFINJEKTIONSVORRICHTUNG FÜR VERBRENNUNGSMOTOREN
APPAREIL D'INJECTION DE CARBURANT POUR MOTEUR À COMBUSTION INTERNE

(30) Priority: 12.05.2011 JP 2011107301
(43) Date of publication of application: 19.03.2014
(73) Proprietor: Toyota Jidosha Kabushiki Kaisha, Toyota-shi, Aichi-ken 471-8571 (JP)
(72) Inventor: YARINO, Motonari, Toyota-shi, Aichi-ken 471-8571 (JP)
(74) Representative: TBK
(86) International application number: PCT/IB2012/000910
(87) International publication number: WO 2012/153180

(56) References cited:
- EP-A1- 1 371 843
- EP-A1- 1 741 924
- EP-A2- 1 371 829
- WO-A1-02/02929
- US-A1- 2005 028 784

## Description

### BACKGROUND OF THE INVENTION

### 1. Field of the Invention

The invention relates to a fuel injection apparatus for an internal combustion engine, which includes a fuel injection valve that injects fuel into a cylinder.

### 2. Description of Related Art

Japanese Patent Application Publication No. 2005-54733 (JP 2005-54733 A) describes a fuel injection apparatus including a fuel injection valve with a multi-hole nozzle. The fuel injection apparatus according to JP 2005-54733 A uses, under a condition that a momentum of a piston is low, a characteristic that when an inter-spray distance is short and a fuel pressure is high, a fuel density in a space downstream of the multi-hole nozzle in the injection direction becomes high and a penetration of a group of fuel sprays as a whole increases.

In general, fuel spray characteristics depend on specifications specific to each nozzle, such as a nozzle hole shape, a spray spread angle, and an injection direction. Some fuel spray characteristics vary depending on a fuel pressure. However, among the fuel spray characteristics, it is difficult to change directional characteristics of a fuel spray with the fuel pressure. That is, in a conventional fuel injection valve, it is difficult to cause a significant change in the directional characteristics of a fuel spray between before and after the fuel pressure reaches a specific fuel pressure.

A fuel injection apparatus according to the preamble of claim 1 is known from EPA 1 371 829.

### SUMMARY OF THE INVENTION

The invention provides a fuel injection apparatus for an internal combustion engine, capable of changing directional characteristics of a fuel spray with a fuel pressure.

A first aspect of the invention relates to a fuel injection apparatus for an internal combustion engine. The fuel injection apparatus includes: a fuel injection valve that injects fuel into a cylinder of the internal combustion engine and is arranged such that the injected fuel is headed in a direction that crosses a central axis of the cylinder; and a fuel pressure control unit that controls a pressure of the fuel that is supplied to the fuel injection valve. The fuel injection valve has an upper nozzle hole group that includes a plurality of nozzle holes and is located on an upper side in a direction of the central axis, and a lower nozzle hole group that includes a plurality of nozzle holes and is located on a lower side in the direction of the central axis. The fuel injection valve is configured such that a fuel density downstream of the lower nozzle hole group in an injection direction is higher than a fuel density downstream of the upper nozzle hole group in an injection direction.

A second aspect of the invention relates to a fuel injection apparatus for an internal combustion engine. The fuel injection apparatus for an internal combustion engine includes: a fuel injection valve that injects fuel into a cylinder of the internal combustion engine and is directed from an intake side toward an exhaust side of the cylinder; and a fuel pressure control unit that controls a pressure of the fuel that is supplied to the fuel injection valve. The fuel injection valve has an upper nozzle hole group that includes a plurality of nozzle holes and is located on an upper side in a direction of the central axis, and a lower nozzle hole group that includes a plurality of nozzle holes and is located on a lower side in the direction of the central axis. The fuel injection valve is configured such that a fuel density downstream of the lower nozzle hole group in an injection direction is higher than a fuel density downstream of the upper nozzle hole group in an injection direction.

When fuel sprays injected from the upper nozzle hole group and the lower nozzle hole group are regarded as one fuel spray, if the fuel pressure is low, the distribution of the fuel density in the fuel spray is not significantly biased, and the fuel sprays are formed discretely and less likely to merge. On the other hand, if the fuel pressure is high, the fuel density downstream of the lower nozzle hole group in the injection direction further increases and one fuel spray in which the lower fuel spray group forms a main flow is obtained. Since the lower fuel group forms the main flow of the one fuel spray, the directional characteristics of the fuel spray shift downward as compared with a case where the fuel pressure is low. Accordingly, it is possible to change the directional characteristics of the fuel spray by controlling the fuel pressure as appropriate. Furthermore, it is possible to obtain a fuel spray suitable for an operating state of the internal combustion engine with a single fuel injection valve.

The fuel injection valve may be configured such that a flow rate of the fuel injected from the lower nozzle hole group is higher than a flow rate of the fuel injected from the upper nozzle hole group. With this fuel injection apparatus, even if the nozzle holes included in the upper nozzle hole group and the nozzle holes included in the lower nozzle hole group are identical to each other, the fuel density downstream of the lower nozzle hole group in the injection direction is higher than the fuel density downstream of the upper nozzle hole group in the injection direction because the flow rate of the fuel injected from the lower nozzle hole group is higher than the flow rate of the fuel injected from the upper nozzle hole group.

The plurality of the nozzle holes of the upper nozzle hole group may be arranged on a first straight line and the plurality of the nozzle holes of the lower nozzle hole group may be arranged on a second straight line, and the first straight line and the second straight line may be parallel to each other. In addition, the plurality of the nozzle holes of the upper nozzle hole group may be arranged at equal intervals and the plurality of the nozzle holes of the lower nozzle hole group may be arranged at equal intervals; a first pitch that is a distance between centers of two adjacent nozzle holes included in the upper nozzle hole group may be equal to a second pitch that is a distance between centers of two adjacent nozzle holes included in the lower nozzle hole group; and each of the first pitch and the second pitch may be larger than a distance between the first straight line and the second straight line. In these cases, it is easy to manufacture the fuel injection valve due to a simplified arrangement of the nozzle hole groups. In addition, there is an advantage that when a plurality of the fuel injection valves are manufactured, individual differences among the fuel injection valves are less likely to occur.

The fuel injection valve may be configured such that a distance between adjacent fuel sprays (hereinafter, referred to as "inter-spray distance") among a plurality of the fuel sprays injected from the lower nozzle hole group is shorter than a distance between adjacent fuel sprays among a plurality of the fuel sprays injected from the upper nozzle hole group. The inter-spray distance of the lower nozzle hole group is shorter than inter-spray distance of the upper nozzle hole group. Therefore, the fuel density downstream of the lower nozzle hole group in the injection direction is higher than the fuel density downstream of the upper side nozzle hole in the injection direction. The inter-spray distance may be adjusted by adjusting the distance between the centers of two adjacent nozzle holes.

The fuel injection valve is configured such that a specific fuel pressure value, at which a rate of change in a downward injection angle with respect to a reference line that is perpendicular to the central axis and passes through a distal end of the fuel injection valve changes, is within a variation range of the fuel pressure; and the fuel pressure control unit may control the pressure of the fuel that is supplied to the fuel injection valve so that the pressure becomes lower than the specific fuel pressure value when the internal combustion engine is operating at a low rotational speed lower than a predetermined rotational speed, and to be equal to or higher than the specific fuel pressure value when the internal combustion engine is operating at a high rotational speed higher than or equal to the predetermined rotational speed. It is known that as a rotational speed of an internal combustion engine increases, a vortex center of a tumble flow formed in the cylinder shifts downward in a direction of a central axis of a cylinder. With this configuration, because the fuel pressure is adjusted to be lower than the specific fuel pressure value when the internal combustion engine is operating at a low rotational speed and adjusted to be equal to or higher than the specific fuel pressure value when the internal combustion engine is operating at a high rotational speed, it is possible to adjust the injection angle of the fuel spray in accordance with a shift of the vortex center of the tumble flow. Therefore, it is possible to cause the fuel spray to follow the tumble flow that changes in accordance with a change in rotational speed of the internal combustion engine, thereby promoting agitation of the air-fuel mixture. Accordingly, it is possible to increase the homogeneity of an air-fuel mixture.

The plurality of the nozzle holes of the upper nozzle hole group may be arranged at equal intervals, and the plurality of the nozzle holes of the lower nozzle hole group may be arranged at equal intervals; and a first pitch that is a distance between centers of two adjacent nozzle holes included in the upper nozzle hole group may be larger than a second pitch that is a distance between centers of two adjacent nozzle holes included in the lower nozzle hole group.

As described above, with the fuel injection apparatus according to the invention, it is possible to change directional characteristics of a fuel spray by controlling a fuel pressure as appropriate. Therefore, it is possible to obtain a fuel spray suitable for an operating state of an internal combustion engine with a single fuel injection valve.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a sectional view schematically showing a main portion of an internal combustion engine to which a fuel injection apparatus according to a first embodiment of the invention is applied;
FIG. 2 is a diagram showing a plurality of nozzle holes formed in a fuel injection valve according to the first embodiment;
FIG. 3 is a sectional view schematically showing a fuel spray, taken along line A-A at a distance Z from a distal end of the fuel injection valve in FIG. 1 in an injection direction;
FIG. 4 is a graph showing a relationship between a fuel pressure and a spray length;
FIG. 5A is a diagram schematically illustrating a state of a fuel spray as viewed along a radial direction of a cylinder when the fuel pressure is lower than a specific fuel pressure value;
FIG. 5B is a diagram schematically illustrating a state of a fuel spray as viewed along the radial direction of the cylinder when the fuel pressure is equal to or higher than the specific fuel pressure value;
FIG. 6 is a diagram showing a shift of a vortex center of a tumble flow in accordance with a change in a rotational speed of the internal combustion engine;
FIG. 7 is a diagram showing a plurality of nozzle holes formed in a fuel injection valve according to a second embodiment of the invention;
FIG. 8 is a plan view showing a state of the internal combustion engine, to which a fuel injection apparatus according to a third embodiment is applied, as viewed along a direction of a central axis of the cylinder;
FIG. 9 is a diagram showing a plurality of nozzle holes formed in a fuel injection valve according to the third embodiment;
FIG. 10 is a sectional view taken along line X-X in FIG. 9;
FIG. 11A is a diagram schematically illustrating a state of a fuel spray as viewed along the direction of the central axis of the cylinder when the fuel pressure is lower than the specific fuel pressure value; and
FIG. 11B is a diagram schematically illustrating a state of a fuel spray as viewed along the direction of the central axis of the cylinder when the fuel pressure is equal to or higher than the specific fuel pressure value.

### DETAILED DESCRIPTION OF EMBODIMENTS

### (First embodiment)

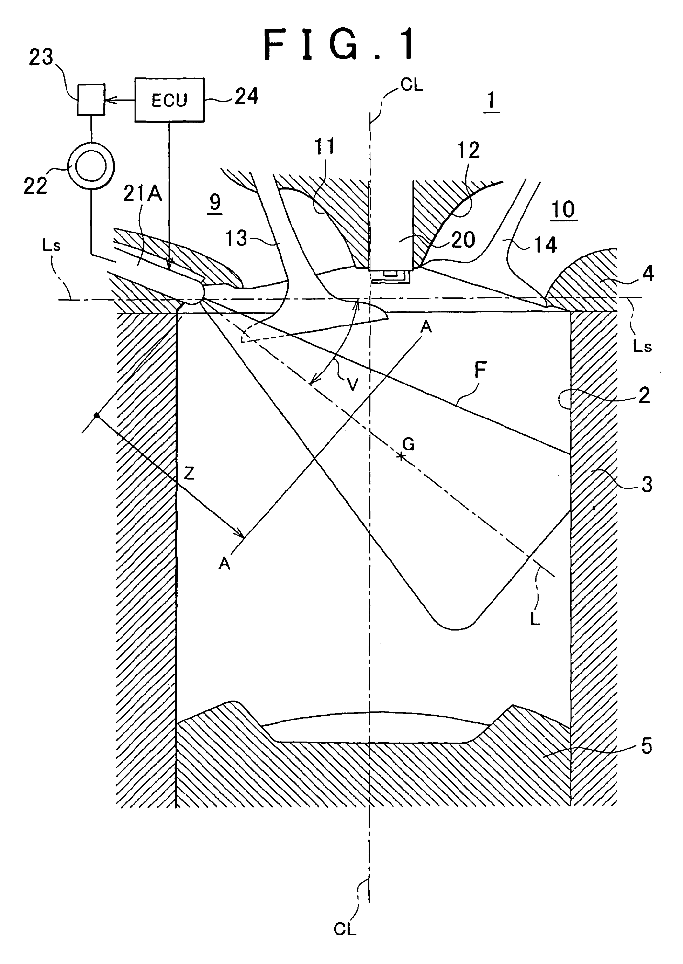

FIG. 1 is a sectional view schematically showing a main portion of an internal combustion engine to which a fuel injection apparatus according to a first embodiment of the invention is applied. An internal combustion engine 1 is configured as a four-cycle spark-ignition internal combustion engine that can be mounted on a vehicle (not shown) as a traction power source. The internal combustion engine 1 includes a plurality of cylinders 2 (only one of the cylinders 2 is shown in the drawing). Each cylinder 2 is formed in a cylinder block 3. An upper end of each cylinder 2 is closed by a cylinder head 4. A piston 5 is provided in each cylinder 2 so as to be capable of reciprocating therein. Note that in the invention, the upper side and the lower side mean the side closer to the top dead center and the bottom dead center of the cylinder, respectively, and therefore, even when the cylinder is laterally placed, for example, the side closer to the top dead center is the upper side and the side closer to the bottom dead center is the lower side.

An intake passage 9 and an exhaust passage 10 are connected to each cylinder 2. The intake passage 9 includes an intake port 11 formed in the cylinder head 4. The exhaust passage 10 includes an exhaust port 12 formed in the cylinder head 4. The intake port 11 is opened/closed by an intake valve 13, and the exhaust port 12 is opened/closed by an exhaust valve 14. Although not shown in the drawings, a three-way catalyst is provided in the exhaust passage 10. Exhaust gas, which is burnt gas, flowing through the exhaust passage 10 is purified by the three-way catalyst.

A spark plug 20 is provided in the cylinder head 4. The spark plug 20 is provided at a center portion of a ceiling of the cylinder 2 such that a distal end portion of the spark plug 20 is located within the cylinder 2. A fuel injection valve 21A that injects fuel into the cylinder 2 is provided in the cylinder head 4 so as to extend along the intake port 11. That is, the fuel injection valve 21A is provided such that the injected fuel is headed in a direction that crosses a central axis CL of the cylinder 2. The fuel injection valve 21A is an electromagnetically-driven fuel injection valve, and a distal end portion thereof is provided with a plurality of nozzle holes. The fuel injection valves 21A provided for the respective cylinders 2 are connected to a common delivery pipe 22. The fuel pressurized by an oil pump (not shown) is introduced into the delivery pipe 22. A fuel pressure adjusting mechanism 23 that adjusts the pressure of the fuel that is supplied to each fuel injection valve 21A is provided in the delivery pipe 22. The fuel injection valve 21A and the fuel pressure adjusting mechanism 23 are controlled by an engine control unit (ECU) 24. The ECU 24 is a computer for appropriately controlling an operating state of the internal combustion engine 1. Information indicating the operating state of the internal combustion engine 1 such as a rotational speed is input into the ECU 24 from various sensors (not shown). Using such information, the ECU 24 executes various control programs prepared in advance to execute fuel injection control including control of fuel injection timing and fuel injection period (injection amount), ignition timing control, and the like. The control executed by the ECU 24 according to the invention will be described later.

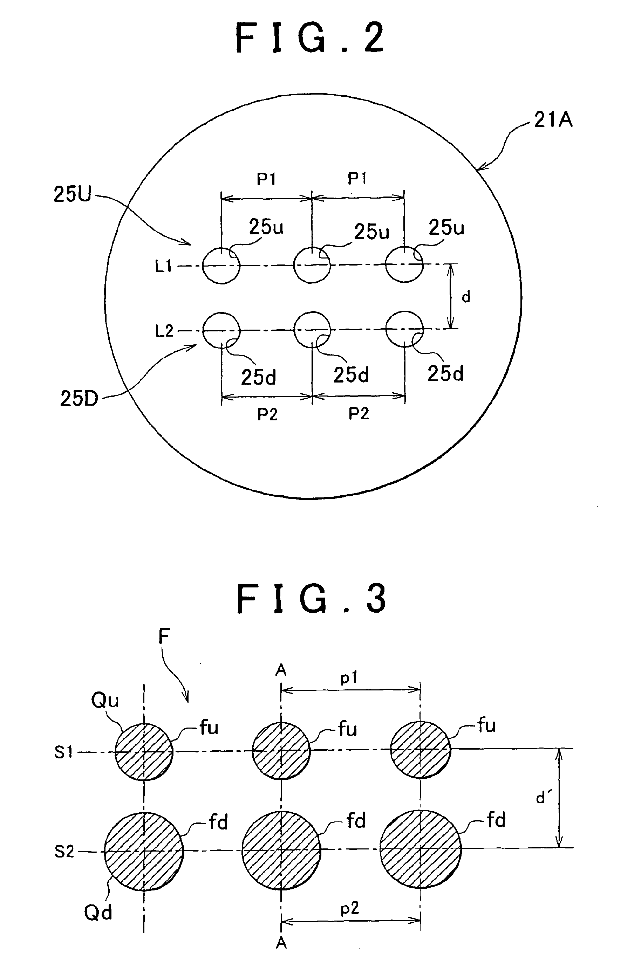

As shown in FIG. 2, a total of six nozzle holes 25u, 25d are formed in the fuel injection valve 21A. A vertical direction in FIG. 2 corresponds to a vertical direction in FIG. 1, and a lateral direction in FIG. 2 corresponds to a direction in FIG. 1 that is perpendicular to the sheet on which FIG. 1 is drawn. Among the nozzle holes shown in FIG. 2, the three nozzle holes 25u located on an upper side in a direction of the central axis CL of the cylinder 2 (see FIG. 1) constitute an upper nozzle hole group 25U, and the three nozzle holes 25d located on a lower side in the direction of the central axis CL constitute a lower nozzle hole group 25D. The three nozzle holes 25u included in the upper nozzle hole group 25U are arranged on a first straight line L1, and the three nozzle holes 25d included in the lower nozzle hole group 25D are arranged on a second straight line L2. The first straight line L1 and the second straight line L2 are parallel to each other. A first pitch P1 that is a distance between centers of two adjacent nozzle holes 25u included in the upper nozzle hole group 25U is equal to a second pitch P2 that is a distance between centers of two adjacent nozzle holes 25d included in the lower nozzle hole group 25D. The first pitch P1 and the second pitch P2 are each longer than a distance d between the first straight line L1 and the second straight line L2. In the fuel injection valve 21A, the plurality of nozzle holes included in each nozzle hole group are identical to each other, and each nozzle hole group is provided on a straight line, which simplifies an arrangement of the nozzle hole groups. This facilitates manufacturing of the fuel injection valve 21A. In addition, there is an advantage that when a plurality of the fuel injection valves 21A are manufactured, individual differences among the fuel injection valves 21A are less likely to occur.

The fuel injection valve 21A is configured such that a flow rate of the fuel injected from the lower nozzle hole group 25D is made higher than a flow rate of the fuel injected from the upper nozzle hole group 25U by design of fuel passages (not shown) that deliver the fuel to the nozzle holes. Therefore, there is a biased distribution of fuel density in a fuel spray F (see FIG. 1.) injected by the fuel injection valve 21A, that is, a fuel density in an upper portion of the fuel spray F is lower than that in a lower portion of the fuel spray F. FIG. 3 is a sectional view schematically showing a fuel spray F (a group of fuel sprays), taken along line A-A at a distance Z (see FIG. 1) from a distal end of the fuel injection valve 21A in an injection direction. As is apparent from FIG. 3, the fuel spray F is formed of a group of fuel sprays fu, fd injected from the respective nozzle holes, and an arrangement of the fuel sprays fu, fd is similar to that of the nozzle holes 25u, 25d shown in FIG. 2. That is, the fuel sprays fu injected from the upper nozzle hole group 25U are arranged on a first straight line S1, and the fuel sprays fd injected from the lower nozzle hole group 25D are arranged on a second straight line S2. The first straight line S1 and the second straight line S2 are parallel to each other. A first pitch p1 that is a distance between centers of two adjacent sprays fu is equal to a second pitch p2 that is a distance between centers of two adjacent sprays fd. The first pitch p1 and the second pitch p2 are each longer than a distance d' between the first straight line S1 and the second straight line S2. As shown in FIG. 3, a flow rate Qd of the fuel sprays fd injected from the lower nozzle hole group 25D is higher than a flow rate Qu of the fuel sprays fu injected from the upper nozzle hole group 25U. In other words, the fuel injection valve 21A is configured such that a fuel density downstream of the lower nozzle hole group 25D in an injection direction is higher than a fuel density downstream of the upper nozzle hole group 25U in an injection direction.

The fuel density in the fuel spray F differs between the upper portion and lower portion. Therefore, it is possible to change directional characteristics (injection angle and spray length) of the fuel spray F with the fuel pressure. As shown in FIG. 1, an injection angle V is defined as a downward angle with respect to a reference line Ls that is perpendicular to the central axis CL of the cylinder 2 and passes through the distal end of the fuel injection valve 21A. A straight line L that determines the injection angle V is defined as a line that passes through a center of gravity G of the fuel spray F, at a predetermined distance from the nozzle holes.

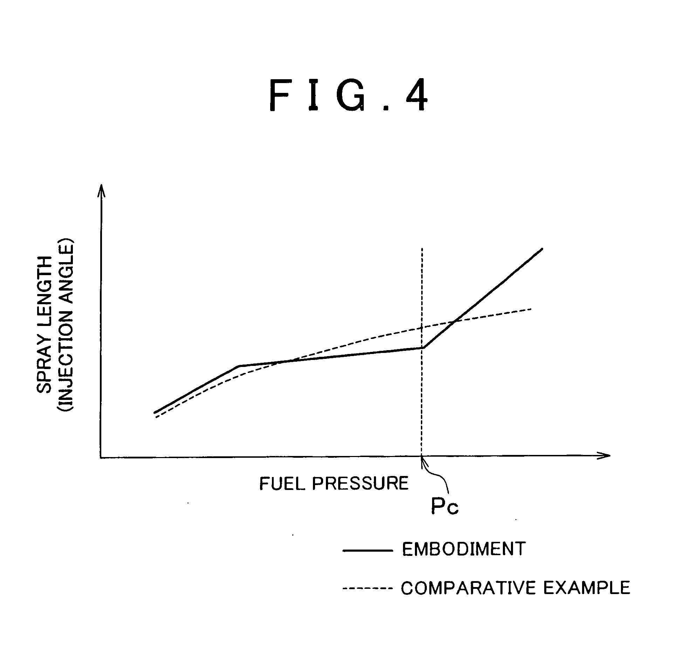

FIG. 4 shows a relationship between a fuel pressure and a spray length. Note that an injection angle changes with respect to the fuel pressure in a manner similar to that shown in FIG. 4. In FIG. 4, a solid line shows the present embodiment, and a broken line shows a comparative example in which a fuel density in an upper portion of a fuel spray is equal to a fuel density in a lower portion of a fuel spray. As is apparent from FIG. 4, in the case where the pressure of the fuel supplied to the fuel injection valve 21A varies, a specific fuel pressure value Pc, at which a rate of change in the spray length (the injection angle) changes, is within a variation range of the fuel pressure. That is, the directional characteristics of the fuel spray F represented by the spray length or the injection angle significantly change at the specific fuel pressure value Pc.

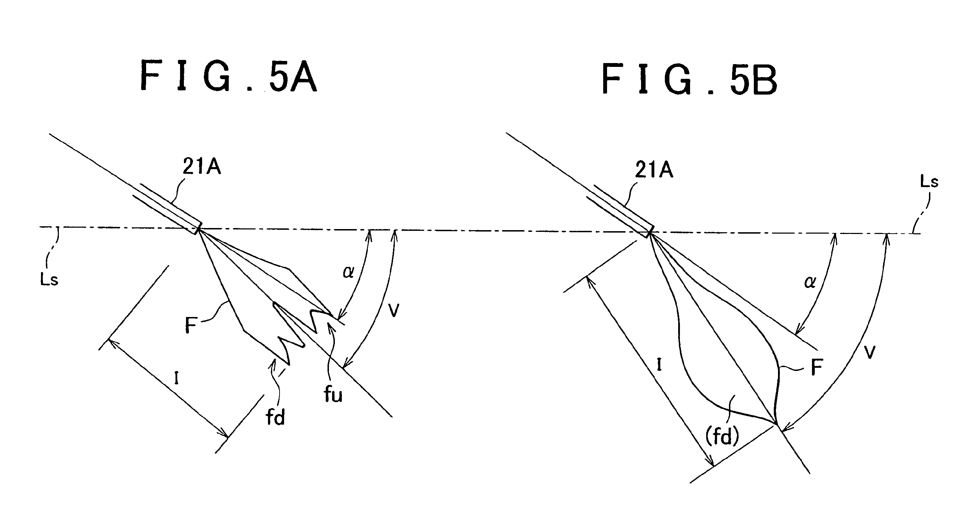

FIGS. 5A and 5B schematically illustrate states of the fuel sprays F when the fuel pressure is lower than the specific fuel pressure value Pc and when the fuel pressure is equal to or higher than the specific fuel pressure value Pc, respectively. FIG. 5A shows the case where the fuel pressure is lower than the specific fuel pressure value Pc, and FIG. 5B shows the case where the fuel pressure is equal to or higher than the specific fuel pressure value Pc. As shown in FIG. 5A, when the fuel pressure is low, the distribution of the fuel density in the fuel spray F is not significantly biased, and the fuel sprays fu, fd are formed discretely. Therefore, a spray length l is relatively short, and the center of gravity of the fuel spray F is located at substantially the center of the fuel spray F. In addition, the injection angle V is also relatively small. On the other hand, as shown in FIG. 5B, when the fuel pressure is high, the fuel density downstream of the lower nozzle hole group 25D in the injection direction further increases, and lower fuel sprays fd form a main flow of the fuel spray F. Therefore, the directional characteristics of the fuel spray F shift downward as compared to the case where the fuel pressure is low. That is, the center of gravity of the fuel spray F shifts downward. In addition, the lower fuel sprays fd become dominant and draw in the upper fuel sprays fu. Therefore, the directional characteristics of the fuel spray F, that is, the spray length l and the injection angle V increase. Referring to a mounting angle α of the fuel injection valve 21A, which is a constant value, a change in the injection angle V is obvious. On the basis of the description above, it is conceivable that a fuel pressure value, at which the lower fuel sprays fd start to form the main flow, is the specific fuel pressure value Pc shown in FIG. 4.

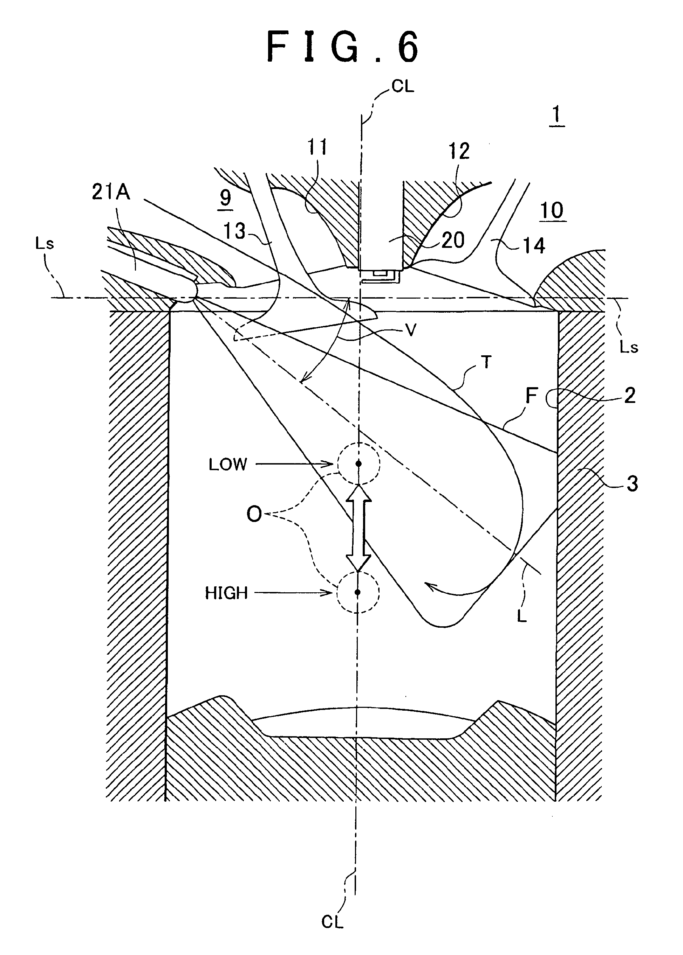

Next, the fuel pressure control executed by the ECU 24 using such characteristics will be descried below. FIG. 6 shows a shift of a vortex center of a tumble flow in accordance with a change in a rotational speed of the internal combustion engine 1. As shown in FIG. 6, the intake port 11 is designed such that a tumble flow T is formed in the cylinder 2 during an intake stroke of the internal combustion engine 1. A vortex center O of the tumble flow T shifts downward as the rotational speed increases. In general, when an injection angle is set such that a fuel spray is located slightly above a vortex center of a tumble flow, the fuel spray is easily agitated by the tumble flow. Therefore, it is known that setting the injection angle in this manner is advantageous in improving homogeneity of an air-fuel mixture.

By operating the fuel pressure adjusting mechanism 23, the ECU 24 controls the fuel pressure to be lower than the specific fuel pressure value Pc to reduce the injection angle V of the fuel spray F when the internal combustion engine 1 is operating at a low rotational speed and the vortex center O of the tumble flow T is located at a high position, and controls the fuel pressure to be equal to or higher than the specific fuel pressure value Pc to increase the injection angle V and the spray length l of the fuel spray F when the internal combustion engine 1 is operating at a high rotational speed and the vortex center O of the tumble flow T is located at a low position. This makes it possible to adjust the injection angle V of the fuel spray F in accordance with a shift of the vortex center O of the tumble flow T. Therefore, it is possible to cause the fuel spray F to follow the tumble flow T that changes in accordance with a change in rotational speed of the internal combustion engine 1, thereby promoting agitation of the air-fuel mixture. Accordingly, it is possible to increase the homogeneity of the air-fuel mixture. In the present embodiment, a fuel pressure control unit according to this invention is implemented by the combination of the ECU 24 and the fuel pressure adjusting mechanism 23.

### (Second embodiment)

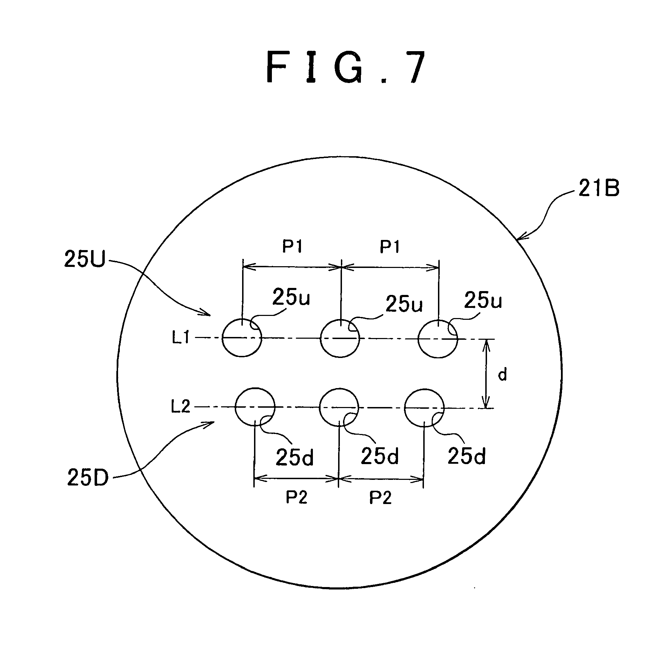

Next, a second embodiment of the invention will be described with reference to FIG. 7. FIG. 7 shows a plurality of nozzle holes formed in a fuel injection valve according to the second embodiment. The second embodiment is the same as the first embodiment except for an arrangement of nozzle holes. As shown FIG. 7, the number of nozzle holes formed in a fuel injection valve 21B according to the second embodiment is the same as the number of nozzle holes according to the first embodiment. However, the second pitch P2 of the lower nozzle hole group 25D is shorter than the first pitch P1 of the upper nozzle hole group 25U. Accordingly, a distance between adjacent fuel sprays (hereinafter, referred to as "inter-spray distance") among a plurality of fuel sprays injected from the lower nozzle hole group 25D is shorter than a distance between adjacent fuel sprays among a plurality of fuel sprays injected from the upper nozzle hole group 25U, Therefore, in the present embodiment as well, the fuel density downstream of the lower nozzle hole group 25D in the injection direction is higher than the fuel density downstream of the upper nozzle hole group 25U in the injection direction, and accordingly, the directional characteristics of the fuel spray change in accordance with a change in the fuel pressure. This makes it possible to achieve an effect similar to that of the first embodiment. In the present embodiment, the flow rate of the fuel injected from the lower nozzle hole group 25D may be higher than the flow rate of the fuel injected from the upper nozzle hole group 25U as in the first embodiment, or the flow rate of the fuel injected from the upper nozzle hole group 25U may be equal to the flow rate of the fuel injected from the lower nozzle hole group 25D.

### (Third embodiment)

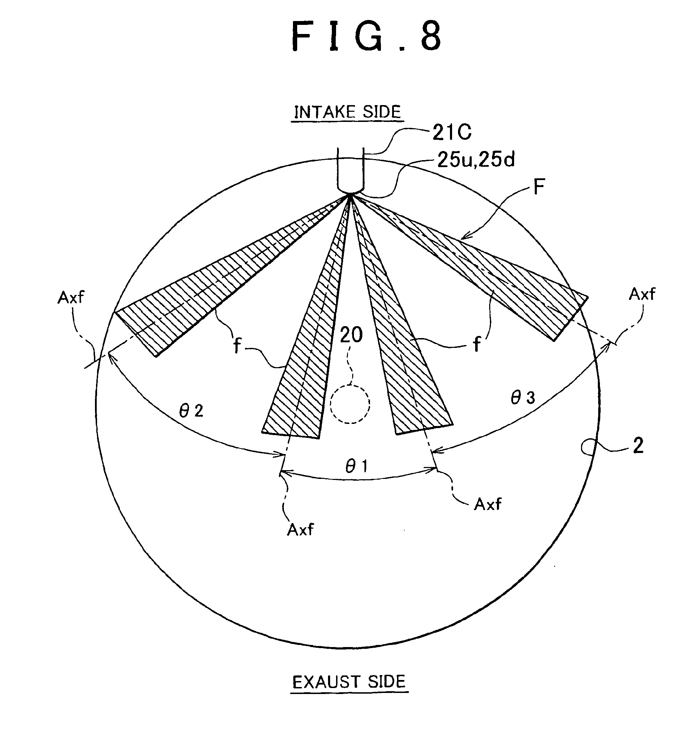

Next, a third embodiment of the invention will be described with reference to FIGS. 8 to 11B. The third embodiment is the same as the first embodiment except for the number and arrangement of nozzle holes. As shown in FIGS. 8 to 10, a fuel injection valve 21C is arranged so as to be directed from an intake side toward an exhaust side of the cylinder 2. The number of nozzle holes provided in the fuel injection valve 21C is four in total. The two nozzle holes 25u included in the upper nozzle hole group 25U are arranged on the first straight line L1, and the two nozzle holes 25d included in the lower nozzle hole group 25D are arranged on the second straight line L2. The first straight line L1 and the second straight line L2 are parallel to each other. The second pitch P2 of the lower nozzle hole group 25D is smaller than the first pitch P1 of the upper nozzle hole group 25U. The first pitch P1 and the second pitch P2 are each larger than the distance d between the first straight line L1 and the second straight line L2. Accordingly, an inter-spray distance of the lower nozzle hole group 25D is shorter than an inter-spray distance of the upper nozzle hole group 25U. Therefore, in the third embodiment as well, the fuel density downstream of the lower nozzle hole group 25D in the injection direction is higher than the fuel density downstream of the upper nozzle hole group 25U in the injection direction, and accordingly, the directional characteristics of the fuel spray change in accordance with a change in the fuel pressure. This makes it possible to achieve an effect similar to that of the first embodiment as described above.

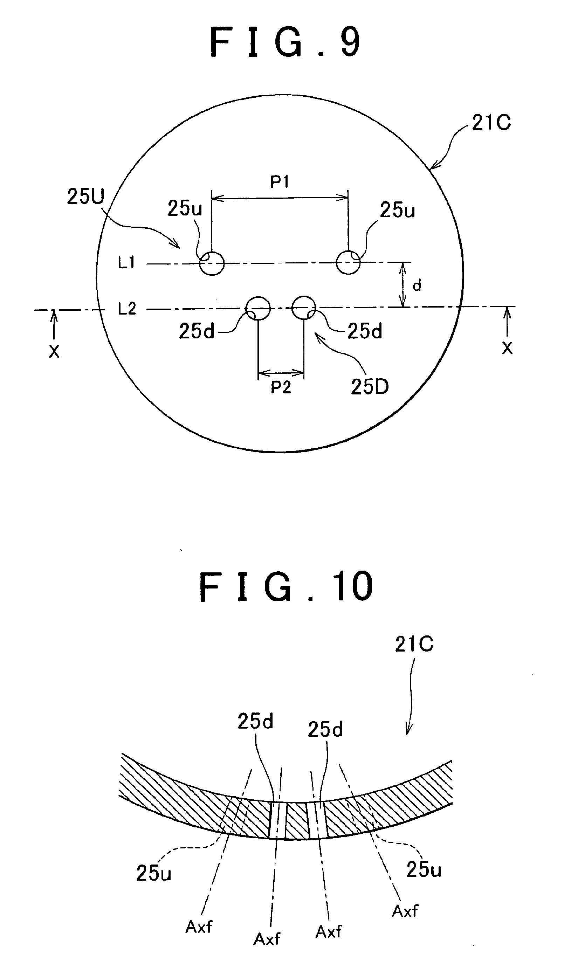

As shown in FIG. 10, the four nozzle holes 25u, 25d formed in the fuel injection valve 21C are arranged at intervals in a lateral direction, when a direction of the central axis CL of the cylinder 2 is a vertical direction, so as to extend radially. The lateral direction in FIG. 10 corresponds to a direction in FIG. 1 that is perpendicular to the sheet on which FIG. 1 is drawn. The injection directions of the nozzle holes 25u, 25d as a whole are set to be radial. Because the four nozzle holes 25u and 25d are configured in this manner, when viewed along the direction of the central axis CL of the cylinder 2, the fuel sprays f injected from the nozzle holes 25u, 25d are arranged in the cylinder 2 as shown in FIG. 8. Straight lines defining the injection directions of the nozzle holes 25u, 25d are defined as injection axes Axf, and angles formed by two adjacent axes Axf are defined as included angles θ1, θ2, θ3. In this case, the included angle θ1 formed by the two injection axes Axf closest to the central axis CL of the cylinder 2 is smaller than each of the other included angles θ2, θ3. In the present embodiment, the included angle θ2 is equal to the included angle θ3. However, the included angles θ2, θ3 may be different from each other, provided that these included angles θ2, θ3 are each larger than the included angle θ1.

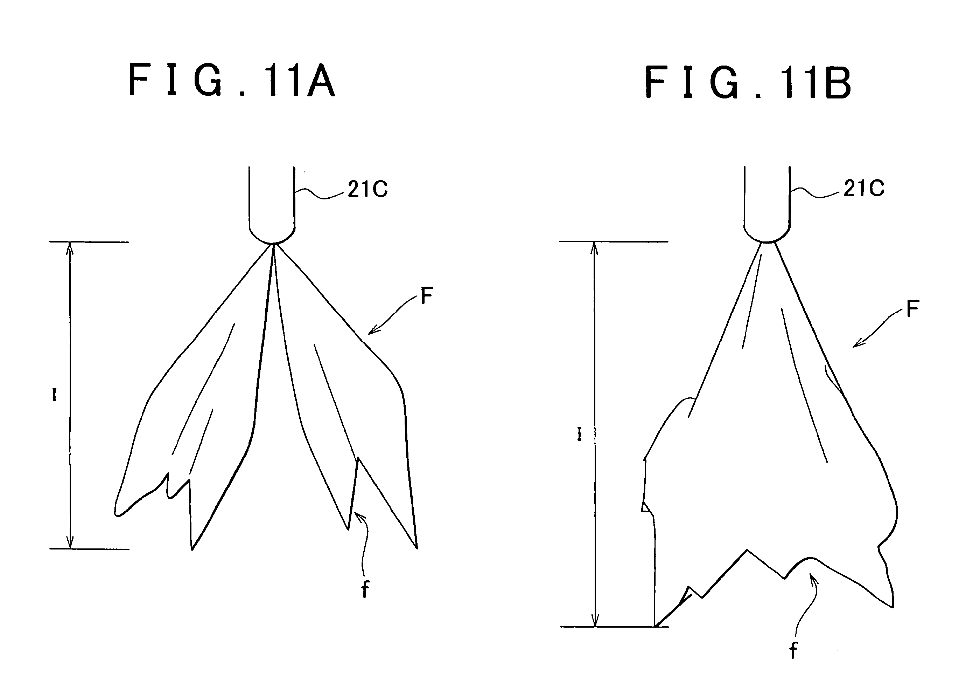

As can be understood from FIG. 8, the inter-spray distance when the included angle is smaller is shorter than the inter-spray distance when the included angle is larger. Therefore, the four fuel sprays f injected from the four nozzle holes 25u, 25d are arranged in the cylinder 2 such that the inter-spray distance at the center portion is shorter than that outside the center portion. Because the four fuel sprays f are arranged in this manner, when the pressure of the fuel that is supplied to the fuel injection valve 21C is low, the two adjacent fuel sprays do not merge even if the inter-spray distance at the center portion is short. Therefore, as shown in FIG. 11A, when a set of the four fuel sprays f is regarded as one fuel spray F, the spray pattern of the fuel spray F is a hollow pattern in which the fuel density at the center portion is lower than that outside the center portion. On the other hand, when the fuel pressure is high, the inter-spray distance at the center portion becomes further shorter, whereby the fuel sprays f merge. Therefore, as shown in FIG. 11B, the spray pattern of the fuel spray F is a solid spray pattern in which the fuel density does not significantly differ between the center portion and the outside of the center portion. After the fuel sprays f merge, the penetration becomes higher than that before the merge. Thus, as shown in FIG. 11B, the spray length l of the fuel spray F becomes longer than that before the merge shown in FIG. 11A.

Thus, according to the third embodiment, it is possible to change the directional characteristics of the fuel spray and to change the spray pattern between the hollow spray pattern and the solid spray pattern with the fuel pressure. It is conceivable that, as well as the directional characteristics, the spray pattern changes at the specific fuel pressure value Pc (see FIG. 4.) at which the rate of change in the spray length changes. Therefore, in the third embodiment, it is considered that the spray pattern and directional characteristics of the fuel spray synchronously change at the specific fuel pressure value Pc as the fuel pressure varies. In general, there are an internal combustion engine operating state for which the hollow spray pattern is suitable and an internal combustion engine operating state for which the solid spray pattern is suitable. Therefore, by switching a fuel state between a state in which the fuel pressure is lower than the specific fuel pressure value Pc and a state in which the fuel pressure is equal to or higher than the specific fuel pressure value Pc in accordance with the operation state of the internal combustion engine, it is possible to select a spray pattern that is suitable for the operation state of the internal combustion engine.

For example, when the internal combustion engine 1 is in a state in which a stratified air-fuel mixture should be formed in the vicinity of the spark plug 20 to improve the ignitability, the ECU 24 operates the fuel pressure adjusting mechanism 23 to control the fuel pressure to be lower than the specific fuel pressure value Pc, thereby changing the spray pattern of the fuel spray F to the hollow spray pattern (see FIG. 11A). In this case, a stratified air-fuel mixture in which the fuel concentration is locally high is formed in the vicinity of the spark plug 20. Moreover, because the hollow spray pattern suppresses collision of the fuel with the spark plug 20, misfire of the spark plug 20 is avoided. When the internal combustion engine 1 is in a state in which the output thereof should be increased, the ECU 24 operates the fuel pressure adjusting mechanism 23 to control the fuel pressure to be equal to or higher than the specific fuel pressure value Pc, thereby changing the spray pattern of the fuel spray F to the solid spray pattern (see FIG. 11B). In this case, the penetration of the fuel spray F is high, so the jet flow effect increases the combustion efficiency of the internal combustion engine 1, which contributes to an increase in the output of the internal combustion engine 1. The combination of the ECU 24 and the fuel pressure adjusting mechanism 23 as described above functions as a fuel pressure control unit according to the invention. Also in the present embodiment, the flow rate of the fuel injected from the lower nozzle hole group 25D may be higher than the flow rate of the fuel injected from the upper nozzle hole group 25U as in the first embodiment, or the flow rate of the fuel injected from the upper nozzle hole group 25U may be equal to the flow rate of the fuel injected from the lower nozzle hole group 25D.

The invention is not limited to the above embodiments, and may be carried out in various other modifications within the scope of the invention. In the above embodiments, four or six nozzle holes are linearly arranged in upper and lower rows. However, the number of nozzle holes is not limited. In addition, there is no particular limitation on an arrangement of nozzle holes, provided that it is possible to identify an upper nozzle hole group located on an upper side in the direction of a central axis of a cylinder and a lower nozzle hole group located on a lower side in the direction of the central axis of the cylinder. That is, there is no limitation on an arrangement of a plurality of nozzle holes, provided that a fuel density downstream of the lower nozzle hole group in an injection direction is higher than a fuel density downstream of the upper nozzle hole group in an injection direction. Furthermore, designing a plurality of nozzle holes in the same shape and size is merely one example, and the shape and size may vary among nozzle holes.

## Claims

1. A fuel injection apparatus for an internal combustion engine, including:
a fuel injection valve (21A) that injects fuel into a cylinder (2) of the internal combustion engine and is arranged such that the injected fuel is headed in a direction that crosses a central axis of the cylinder (2); and
a fuel pressure control unit (23, 24) that controls a pressure of the fuel that is supplied to the fuel injection valve (21A), wherein:
the fuel injection valve (21A) has an upper nozzle hole group (25U) that includes a plurality of nozzle holes (25u) and is located on an upper side in a direction of the central axis, and a lower nozzle hole group (25D) that includes a plurality of nozzle holes (25d) and is located on a lower side in the direction of the central axis; and
the fuel injection valve (21A) is configured such that a fuel density downstream of the lower nozzle hole group (25D) in an injection direction is higher than a fuel density downstream of the upper nozzle hole group (25U) in an injection direction, **characterized in that**:
the fuel injection valve (21A) is configured such that a specific fuel pressure value, at which a rate of change in a downward injection angle with respect to a reference line that is perpendicular to the central axis and passes through a distal end of the fuel injection valve (21A) changes, is within a variation range of the fuel pressure; and
the fuel pressure control unit (23. 24) controls the pressure of the fuel that is supplied to the fuel injection valve (21A) so that the pressure becomes lower than the specific fuel pressure value when the internal combustion engine is operating at a low rotational speed lower than a predetermined rotational speed, and to be equal to or higher than the specific fuel pressure value when the internal combustion engine is operating at a high rotational speed higher than or equal to the predetermined rotational speed.

2. The fuel injection apparatus according to claim 1, wherein
the fuel injection valve (21A) is directed from an intake side toward an exhaust side of the cylinder (2).

3. The fuel injection apparatus according to claim 1 or 2, wherein
the fuel injection valve (21A) is configured such that a flow rate of the fuel injected from the lower nozzle hole group (25D) is higher than a flow rate of the fuel injected from the upper nozzle hole group (25U).

4. The fuel injection apparatus according to any one of claims 1 to 3, wherein:
the plurality of the nozzle holes (25u) of the upper nozzle hole group (25U) are arranged on a first straight line, and the plurality of the nozzle holes (25d) of the lower nozzle hole group (25D) are arranged on a second straight line; and
the first straight line and the second straight line are parallel to each other.

5. The fuel injection apparatus according to claim 4, wherein:
the plurality of the nozzle holes (25u) of the upper nozzle hole group (25U) are arranged at equal intervals, and the plurality of the nozzle holes (25d) of the lower nozzle hole group (25D) are arranged at equal intervals;
a first pitch that is a distance between centers of two adjacent nozzle holes (25u) included in the upper nozzle hole group (25U) is equal to a second pitch that is a distance between centers of two adjacent nozzle holes (25d) included in the lower nozzle hole group (25D); and
each of the first pitch and the second pitch is larger than a distance between the first straight line and the second straight line.

6. The fuel injection apparatus according to any one of claims 1 to 4, wherein
the fuel injection valve (21A) is configured such that a distance between adjacent fuel sprays among a plurality of the fuel sprays injected from the lower nozzle hole group (25D) is shorter than a distance between adjacent fuel sprays among a plurality of the fuel sprays injected from the upper nozzle hole group (25U).

## Patentansprüche

1. Kraftstoffeinspritzvorrichtung für eine Brennkraftmaschine, mit
einem Kraftstoffeinspritzventil (21A), das Kraftstoff in einen Zylinder (2) der Brennkraftmaschine einspritzt und so angeordnet ist, dass der eingespritzte Kraftstoff in eine Richtung gelenkt ist, die die Mittelachse des Zylinders (2) kreuzt; und
einer Kraftstoffdrucksteuereinheit (23, 24), die einen Druck des dem Kraftstoffeinspritzventil (21A) zugeführten Kraftstoffs steuert, wobei
das Kraftstoffeinspritzventil (21A) eine obere Düsenlochgruppe (25U), die eine Vielzahl von Düsenlöchern (25u) umfasst und auf einer oberen Seite in einer Richtung der Mittelachse angeordnet ist, und eine untere Düsenlochgruppe (25D) hat, die eine Vielzahl von Düsenlöchern (25d) umfasst und auf einer unteren Seite in der Richtung der Mittelachse angeordnet ist; und
wobei das Kraftstoffeinspritzventil (21A) so eingerichtet ist, dass eine Kraftstoffdichte stromabwärts der unteren Düsenlochgruppe (25D) in einer Einspritzrichtung höher ist als eine Kraftstoffdichte stromabwärts der oberen Düsenlochgruppe (25U) in einer Einspritzrichtung, **dadurch gekennzeichnet, dass**
das Kraftstoffeinspritzventil (21A) so eingerichtet ist, dass ein bestimmter Kraftstoffdruckwert, bei dem sich eine Änderungsgeschwindigkeit eines nach unten gerichteten Einspritzwinkels bezüglich einer Bezugslinie ändert, die senkrecht zu der Mittelachse ist und durch ein Distalende des Kraftstoffeinspritzventils (21A) verläuft, innerhalb eines Änderungsbereichs des Kraftstoffdrucks ist; und
die Kraftstoffdrucksteuereinheit (23, 24) den Druck des dem Kraftstoffeinspritzventil (21A) zugeführten Kraftstoffs so steuert, dass der Druck kleiner wird als der bestimmte Kraftstoffdruckwert, wenn die Brennkraftmaschine mit niedriger Drehzahl betrieben wird, die kleiner als eine vorgegebene Drehzahl ist, und um gleich oder höher als der bestimmte Kraftstoffdruckwert zu sein, wenn die Brennkraftmaschine mit hoher Drehzahl betrieben wird, die höher als die oder gleich der vorgegebene(n) Drehzahl ist.

2. Kraftstoffeinspritzvorrichtung nach Anspruch 1, wobei
das Kraftstoffeinspritzventil (21A) von einer Einlassseite in Richtung einer Auslassseite des Zylinders (2) gerichtet ist.

3. Kraftstoffeinspritzvorrichtung nach Anspruch 1 oder 2, wobei
das Kraftstoffeinspritzventil (21A) so eingerichtet ist, dass ein Durchsatz des von der unteren Düsenlochgruppe (25D) eingespritzten Kraftstoffs höher ist als ein Durchsatz des von der oberen Düsenlochgruppe (25U) eingespritzten Kraftstoffs.

4. Kraftstoffeinspritzvorrichtung nach einem der Ansprüche 1 bis 3, wobei
die Vielzahl der Düsenlöcher (25u) der oberen Düsenlochgruppe (25U) auf einer ersten geraden Linie angeordnet ist, und die Vielzahl der Düsenlöcher (25d) der unteren Düsenlochgruppe (25D) auf einer zweiten geraden Linie angeordnet ist; und
wobei die erste gerade Linie und die zweite gerade Linie zueinander parallel sind.

5. Kraftstoffeinspritzvorrichtung nach Anspruch 4, wobei
die Vielzahl der Düsenlöcher (25u) der oberen Düsenlochgruppe (25U) in gleichen Intervallen angeordnet ist und die Vielzahl der Düsenlöcher (25d) der unteren Düsenlochgruppe (25D) in gleichen Intervallen angeordnet ist, wobei
eine erste Teilung, die ein Abstand zwischen Mitten zweier benachbarter in der oberen Düsenlochgruppe (25U) enthaltener Düsenlöcher (25u) ist, gleich einer zweiten Teilung ist, die ein Abstand zwischen Mitten zweier benachbarter in der unteren Düsenlochgruppe (25D) enthaltener Düsenlöcher (25d) ist; und wobei
sowohl die erste Teilung als auch die zweite Teilung größer ist als ein Abstand zwischen der ersten geraden Linie und der zweiten geraden Linie.

6. Kraftstoffeinspritzvorrichtung nach einem der Ansprüche 1 bis 4, wobei
das Kraftstoffeinspritzventil (21A) so eingerichtet ist, dass ein Abstand zwischen benachbarten Kraftstoffeinspritzstrahlen aus einer Vielzahl der von der unteren Düsenlochgruppe (25D) eingespritzten Kraftstoffeinspritzstrahlen kleiner ist als ein Abstand zwischen benachbarten Kraftstoffeinspritzstrahlen aus einer Vielzahl der von der oberen Düsenlochgruppe (25U) eingespritzten Kraftstoffeinspritzstrahlen.

## Revendications

1. Appareil d'injection de carburant pour un moteur à combustion interne, comportant :
une soupape d'injection de carburant (21A) qui injecte du carburant dans un cylindre (2) du moteur à combustion interne et est agencée de sorte que le carburant injecté soit dirigé dans une direction qui croise un axe central du cylindre (2) : et
une unité de régulation de pression de carburant (23, 24) qui régule une pression du carburant qui est fourni à la soupape d'injection de carburant (21A), dans lequel :
la soupape d'injection de carburant (21A) a un groupe de trous d'injection supérieur (25U) qui comporte une pluralité de trous d'injection (25u) et est situé sur un côté supérieur dans une direction de l'axe central, et un groupe de trous d'injection inférieur (25D) qui comporte une pluralité de trous d'injection (25d) et est situé sur un côté inférieur dans la direction de l'axe central ; et
la soupape d'injection de carburant (21A) est configurée de sorte qu'une densité de carburant en aval du groupe de trous d'injection inférieur (25D) dans une direction d'injection soit supérieure à une densité de carburant en aval du groupe de trous d'injection supérieur (25U) dans une direction d'injection, **caractérisé en ce que**
la soupape d'injection de carburant (21A) est configurée de sorte qu'une valeur de pression de carburant spécifique, à laquelle un taux de variation d'un angle d'injection vers le bas par rapport à une ligne de référence qui est perpendiculaire à l'axe central et passe par une extrémité distale de la soupape d'injection de carburant (21a) varie, soit dans une plage de variation de la pression de carburant ; et
l'unité de régulation de pression de carburant (23, 24) régule la pression du carburant qui est fourni à la soupape d'injection de carburant (21A) de sorte que la pression devienne inférieure à la valeur de pression de carburant spécifique lorsque le moteur à combustion interne fonctionne à une faible vitesse de rotation inférieure à une vitesse de rotation prédéterminée, et pour être supérieure ou égale à la valeur de pression de carburant spécifique lorsque le moteur à combustion interne fonctionne à une vitesse de rotation élevée supérieure ou égale à la vitesse de rotation prédéterminée.

2. Appareil d'injection de carburant selon la revendication 1, dans lequel
la soupape d'injection (21A) est dirigée d'un côté admission vers un côté échappement du cylindre (2) ;

3. Appareil d'injection de carburant selon la revendication 1 ou 2, dans lequel
la soupape d'injection de carburant (21A) est configurée de sorte qu'un débit du carburant injecté à partir du groupe de trous d'injection inférieur (25D) soit supérieur à un débit du carburant injecté à partir du groupe de trous d'injection supérieur (25U).

4. Appareil d'injection de carburant selon l'une quelconque des revendications 1 à 3, dans lequel :
la pluralité des trous d'injection (25u) du groupe de trous d'injection supérieur (25U) sont agencés sur une première ligne droite, et la pluralité des trous d'injection (25d) du groupe de trous d'injection inférieur (25D) sont agencés sur une deuxième ligne droite, et
la première ligne droite et la deuxième ligne droite sont parallèles l'une à l'autre.

5. Appareil d'injection de carburant selon la revendication 4, dans lequel :
la pluralité de trous d'injection (25u) du groupe de trous d'injection supérieur (25U) sont agencés à des intervalles égaux, et la pluralité de trous d'injection (25d) du groupe de trous d'injection inférieur (25D) sont agencés à des intervalles égaux ;
un premier pas qui est une distance entre les centres de deux trous d'injection adjacents (25u) inclus dans le groupe de trous d'injection supérieur (25U) est égal à un deuxième pas qui est une distance entre les centres de deux trous d'injection adjacents (25d) inclus dans le groupe de trous d'injection inférieur (25D) ; et
chacun du premier pas et du deuxième pas est plus grand qu'une distance entre la première ligne droite et la deuxième ligne droite.

6. Appareil d'injection de carburant selon l'une quelconque des revendications 1 à 4, dans lequel
la soupape d'injection de carburant (21A) est configurée de sorte qu'une distance entre des jets de carburant adjacents parmi une pluralité des jets de carburant injectés à partir du groupe de trous d'injection inférieur (25D) soit plus courte qu'une distance entre des jets de carburant adjacents parmi une pluralité des jets de carburant injectés à partir du groupe de trous d'injection supérieur (25U).
